# EUROPEAN PATENT SPECIFICATION

(11) **EP 2 274 977 B1**
(45) Date of publication and mention of the grant of the patent: **06.11.2013**
(21) Application number: 09011617.9
(22) Date of filing: 10.09.2009
(51) Int. Cl.: A01K 83/00

(54) **Fishhook**
Fischhaken
Hameçon

(30) Priority: 16.07.2009 JP 2009004956 U
(43) Date of publication of application: 19.01.2011
(73) Proprietor: Dohitomi & Co., Ltd., Kato-shi Hyogo-ken (JP)
(72) Inventor: Dohi, Yoshiro, Kato-shi Hyogo-ken (JP)
(74) Representative: Glawe, Delfs, Moll

(56) References cited:
- EP-A2- 2 039 246
- WO-A1-97/04648
- US-A- 4 621 449
- US-A- 5 685 108
- US-B1- 6 481 149

## Description

### [Technical Field]

The present device relates to a fishhook in which a barb, which is generally provided, is not provided in a hook tip, a so-called barbless hook.

### [Background Art]

In recent years, sport fishing has become popular, and a practice of so-called catch and release in which a caught fish is released to the place where it was caught has become common. To keep such a practice, care should be taken to avoid damage to a caught fish.

Barbless hooks have been invented for that purpose, which have been long used for fishing salmon or trout in the West. With the barbless hook, a caught fish can be released in a good condition without being damaged, and thus the barbless hook is an optimum fishhook for keeping the practice.

However, in use of the barbless hook, inexperience may cause fishing failure because a barb, which is generally provided, is not provided in a hook tip. In order to avoid the failure, the applicant has proposed that a plurality of grooves are formed near a position on an inside of a hook tip where a barb is to be provided (for example, see JP-U-3 135 264 or EP 2 039 246 A2). This can meet contradictory needs of avoiding damage to a caught fish and avoiding fishing failure.

Furthermore, it is referred to documents WO 97/04648, US 5,685,108 and US 6,481,149.

[Summary of the Device]
[Problems to be Solved by the Device]

However, the above described fishhook of the art tends to have a hook tip with less sharpness. The present device shall eliminate this defect and meet contradictory needs of avoiding damage to a caught fish and avoiding fishing failure.

### [Means for Solving the Problems]

In order to achieve the above described object, there is provided a fishhook according to claim 1. In the present device, an arcuate rib protruding outward is formed on an outside of a hook tip on the side opposite to the side where a plurality of grooves are formed, and opposite sides of the arcuate rib are recessed. Thus, ridges between the arcuate rib protruding outward and the recesses on the opposite sides thereof are formed into knife edges, thereby providing a sharper hook tip.

Particularly, the ridges between the arcuate rib protruding outward and the recesses on the opposite sides thereof are formed into the knife edges, thereby reducing resistance in insertion of the hook tip, and further promoting the advantage of avoiding damage to a caught fish.

Specifically, the present device comprises a combination of a technique of forming a plurality of grooves near a position on an inside of a hook tip where a barb is to be provided and a technique of forming an arcuate rib protruding outward on an outside of the hook tip on the side opposite to the side where the plurality of grooves are formed and recessing opposite sides of the arcuate rib. The combination of the techniques can provide the above described advantage.

A smaller number of grooves are preferably formed in a small-sized hook. For example, it is preferable that about five grooves are formed in a relatively large-sized hook, and about three grooves, which are smaller in number, are formed in the small-sized hook. This allows grooves to be easily formed in the small-sized hook.

A vertical groove is preferably formed from a body surface of an eye through a line winding portion to an upper portion of a shank. With such a vertical groove, a line can be wound around the line winding portion with a leader of a line located in the vertical groove. This prevents line breakage and rotation of the wound line.

### [Advantages of the Device]

According to the device in claim 1, contradictory needs can be met of avoiding damage to a caught fish and avoiding fishing failure. The ridges between the arcuate rib protruding outward and the recesses on the opposite sides thereof are formed into the knife edges, thereby providing a sharper hook tip. Particularly, resistance in insertion of the hook tip is reduced to further promote the advantage of avoiding damage to a caught fish.

According to the device in claim 2, grooves can be easily formed in a small-sized hook.

According to the device in claim 3, the line can be wound around the line winding portion with the leader of the line located in the vertical groove formed from the body surface of the eye through the line winding portion to the upper portion of the shank. This prevents line breakage and rotation of the wound line.

### [Brief Description of the Drawings]

[Figure 1]

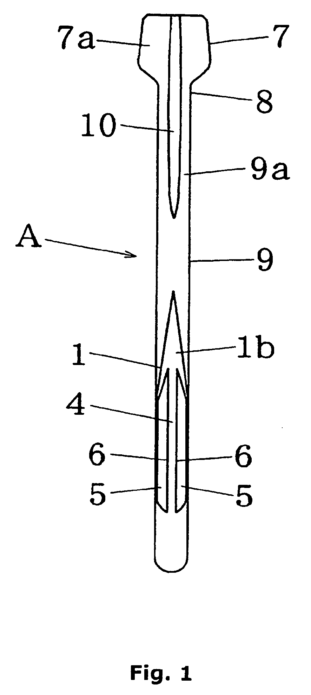

Figure 1 is a general front view of an example of a mode for carrying out the present device.
[Figure 2]

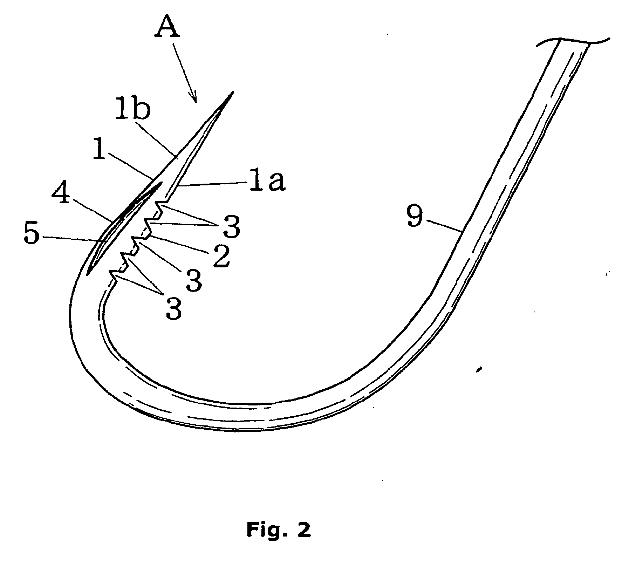

Figure 2 is an enlarged side view of a part from a hook tip to a shank.
[Figure 3]

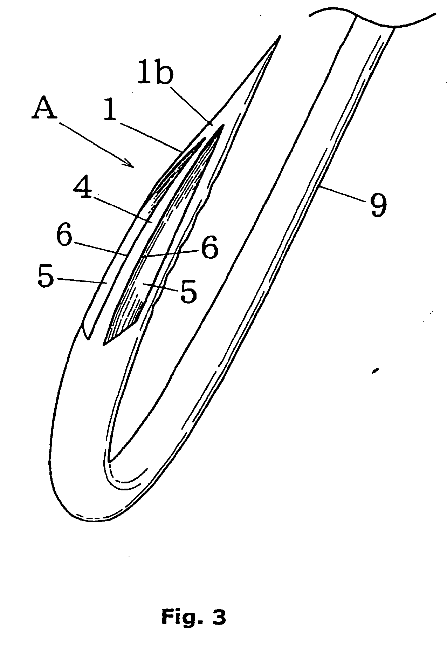

Figure 3 is a partial perspective view of only the hook tip further enlarged.

### [Mode for Carrying Out the Device]

An example of a mode for carrying out the present device will be described in detail with reference to the drawings. As shown in Figure 2, a plurality of grooves 3 are formed near a position 2 on an inside 1a of a hook tip 1 of a fishhook A where a barb is to be provided. This avoids damage to a caught fish and fishing failure. These two contradictory, needs can be met by the ideal fishhook having the above described configuration.

Also, an arcuate rib 4 protruding outward is formed on an outside 1b of the hook tip on the side opposite to the side where the plurality of grooves 3 are formed, and opposite sides of the arcuate rib 4 are recessed. Thus, ridges 6 between the arcuate rib 4 protruding outward and the recesses 5 and 5 on the opposite sides thereof are formed into knife edges, thereby providing a sharper hook tip.

Particularly, the ridges 6 between the arcuate rib 4 protruding outward and the recesses 5 and 5 on the opposite sides thereof are formed into the knife edges, thereby reducing resistance in insertion of the hook tip, and further promoting the advantage of avoiding damage to a caught fish.

The groove 3 is preferably as thin and shallow as possible. This can further avoid damage to a caught fish, and also the fishhook becomes hard to break as compared with the case where the groove 3 is thick and deep.

The number of the grooves 3 is preferably about three to five, and a smaller number of grooves are preferably formed in a small-sized hook. For example, it is preferable that about five grooves are formed in a relatively large-sized hook, and about three grooves, which are smaller in number, are formed in the small-sized hook. This allows grooves to be easily formed in the small-sized hook.

A vertical groove 10 is preferably formed from a body surface 7a of an eye 7 through a line winding portion 8 to an upper portion 9a of a shank 9. With such a vertical groove 10, a line can be wound around the line winding portion 8 with a leader of a line (not shown) located in the vertical groove 10. This prevents line breakage and rotation of the wound line.

The embodiment described above is an example of the mode for carrying out the present device, and in carrying out the present device, the shape of each part is not limited to the shown example, but various design choices may be made within the scope of the appended claims.

### [Description of Symbols]

1 ... hook tip, 1b ... outside of hook tip, 2 ... position where barb is to be provided, 3 ... groove, 4 ... arcuate rib, 5 ... recess, 6 ... ridge, 7 ... eye, 7a ... body surface, 8 ... line winding portion, 9 ... shank, 9a ... upper portion of shank, 10 ... vertical groove, A ... fishhook

## Claims

1. A fishhook (A) having no barb inside (1a) of a hook tip (1) comprises a plurality of grooves (3) having V-shaped cross-sectional surface which are formed in a position near the hook tip inside (1a) of the hook tip (1), **characterized in that** an arcuate rib (4) protruding outward is formed on an outside (1b) of the hook tip along the opposite side to the side where the plurality of grooves are formed, and recesses (5) are provided on both opposite sides of the arcuate rib (4) in an axial direction of the fishhook along the length of the arcuate rib (4), so that the breadth of the arcuate rib is approximately the same along its extension between the recesses (5).

2. The fishhook according to claim 1, **characterized in that** a smaller number grooves (3) are formed in a small-sized hook.

3. The fishhook according to claim 1, **characterized in that** a vertical groove (10) is formed from a body surface (7a) of an eye (7) through a line winding portion (8) to an upper portion (9a) of a shank (9).

## Patentansprüche

1. Angelhaken (A), ohne Widerhaken innen (1a) an einer Hakenspitze (1), umfassend eine Anzahl an Rillen (3) mit einer V-förmigen Querschnittsoberfläche, die in einem Bereich nahe der Hakenspitze innen (1a) an der Hakenspitze (1) ausgebildet sind, **dadurch gekennzeichnet, dass** eine nach außen vorstehende bogenförmige Rippe (4) auf einer Außenseite (1b) der Hakenspitze gebildet ist entlang der Seite, die der Seite, an welcher die Anzahl an Rillen ausgebildet sind, entgegengesetzt ist, und Aussparungen (5) an beiden gegenüberliegenden Seiten der bogenförmigen Rippe (4) in einer axialen Richtung des Angelhakens entlang der Länge der bogenförmigen Rippe (4) vorgesehen sind, so dass die Breite der bogenförmigen Rippe entlang ihrer Erstreckung zwischen den Aussparungen (5) ungefähr gleich ist.

2. Angelhaken gemäß Anspruch 1, **dadurch gekennzeichnet, dass** eine geringere Anzahl an Rillen (3) in einem Angelhaken geringer Größe ausgebildet ist.

3. Angelhaken gemäß Anspruch 1, **dadurch gekennzeichnet, dass** eine vertikale Rille (10) von einer Körperoberfläche (7a) eines Öhrs (7) über einen Schnurwicklungsbereich (8) zu einem oberen Bereich (9a) eines Schafts (9) hin ausgebildet ist.

## Revendications

1. Hameçon (A) ayant un intérieur (1a) de pointe d'hameçon (1) sans ardillons comprenant une pluralité de rainures (3) ayant une surface transversale en forme de V, qui sont formées dans une position à proximité de l'intérieur de pointe d'hameçon (1a) de la pointe d'hameçon (1), **caractérisé en ce qu'**une nervure arquée (4) faisant saillie vers l'extérieur est formée sur un extérieur (1b) de la pointe d'hameçon le long du côté opposé au côté où la pluralité de rainures sont formées, et des évidements (5) sont prévus des deux côtés opposés de la rainure arquée (4) dans une direction axiale de l'hameçon le long de la longueur de la nervure arquée (4), de sorte que la largeur de la nervure arquée est approximativement la même le long de son extension entre les évidements (5).

2. Hameçon selon la revendication 1 **caractérisé en ce que** l'on forme un plus petit nombre de rainures (3) dans un hameçon de petite taille.

3. Hameçon selon la revendication 1, **caractérisé en ce qu'**une rainure verticale (10) est formée à partir d'une surface de corps (7a) d'un chas (7) en passant par une partie d'enroulement de ligne (8) jusqu'à une partie supérieure (9a) d'une tige (9).
